(19) **Europäisches Patentamt**
**European Patent Office**
**Office européen des brevets**

(11) **EP 4 207 629 A1**

(12) **EUROPEAN PATENT APPLICATION**
published in accordance with Art. 153(4) EPC

(43) Date of publication:
**05.07.2023 Bulletin 2023/27**

(21) Application number: **21878989.9**

(22) Date of filing: **15.06.2021**

(51) International Patent Classification (IPC):
***H04B 7/185*** (2006.01)

(52) Cooperative Patent Classification (CPC):
**H04B 7/185**

(86) International application number:
**PCT/CN2021/100096**

(87) International publication number:
**WO 2022/077938 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.10.2020 CN 202011102661**
**06.04.2021 CN 202110368255**

(71) Applicant: **Huawei Technologies Co., Ltd.**
**Shenzhen, Guangdong 518129 (CN)**

(72) Inventors:
• **QIAO, Yunfei**
**Shenzhen, Guangdong 518129 (CN)**
• **CHEN, Ying**
**Shenzhen, Guangdong 518129 (CN)**
• **LI, Rong**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **EPHEMERIS DATA TRANSMISSION METHOD AND DEVICE, STORAGE MEDIUM, CHIP, AND SYSTEM**

(57) This application relates to the field of communication technologies, and discloses an ephemeris data transmission method, apparatus, and system, a storage medium, and a chip, to resolve a problem of inefficient ephemeris data transmission in a related technology. In embodiments of this application, a terminal obtains ephemeris data of a satellite for a plurality of times, where the ephemeris data includes any one of the following information types: orbit status information used to determine a position of the satellite and orbit parameter information indicating an orbit of the satellite; and after obtaining ephemeris data each time, the terminal determines an information type included in the obtained ephemeris data, where in a process in which the terminal obtains ephemeris data of the satellite for a plurality of times, ephemeris data obtained at least once includes the orbit status information, and ephemeris data obtained at least once includes the orbit parameter information.

FIG. 2

**Description**

**CROSS-REFERENCE TO RELATED APPLICATIONS**

This application claims priorities to Chinese Patent Application No. 202011102661.7, filed with the China National Intellectual Property Administration on October 15, 2020 and entitled "EPHEMERIS DATA TRANSMISSION METHOD, APPARATUS, AND SYSTEM, STORAGE MEDIUM, AND CHIP", and to Chinese Patent Application No. 202110368255.3, filed with the China National Intellectual Property Administration on April 6,2021 and entitled "EPHEMERIS DATA TRANSMISSION METHOD, APPARATUS, AND SYSTEM, STORAGE MEDIUM, AND CHIP", both of which are incorporated herein by reference in their entireties.

**TECHNICAL FIELD**

Embodiments of this application relate to the field of communication technologies, and in particular, to an ephemeris data transmission method, apparatus, and system, a storage medium, and a chip.

**BACKGROUND**

At present, satellite communication is irreplaceable in some important fields, such as space communication, aviation communication, maritime communication, and military communication. In addition, satellite communication has features such as a long communication distance, a large coverage area, and flexible networking. Therefore, a satellite can be used as a fixed terminal and provide services for various mobile terminals. A conventional terrestrial network cannot provide a mobile communication network with seamless coverage for UE, especially in a place in which a base station cannot be deployed, such as a sea, a desert, or the air. Therefore, a non-terrestrial network (non-terrestrial network, NTN) is introduced into a 5th-generation (5th-generation, 5G) communication technology system. The non-terrestrial network provides the mobile communication network with seamless coverage for the user equipment (user equipment, UE) by deploying a base station or some functions of a base station on a high-altitude platform or a satellite, and the high-altitude platform or the satellite is little affected by a natural disaster. This can improve reliability of the 5G system.

In a process in which communication needs to be implemented by using the satellite, in an application scenario, orbit status information of the satellite, that is, real-time positioning information of the satellite, needs to be obtained. The real-time positioning information may be used for satellite positioning, or may be used in a navigation technology or the like after being used to compensate for a communication parameter. In another scenario, orbit parameter information needs to be obtained. The orbit parameter information may be used to predict a running status of the satellite, that is, determine the running status of the satellite. In the conventional technology, the orbit status information and the orbit parameter information are obtained from a navigation message broadcast by the satellite. However, a ground terminal can obtain the complete orbit status information and orbit parameter information from ephemeris data of the navigation message only after continuously listening to the navigation message for 750 seconds. Therefore, in the conventional technology, obtaining the orbit status information or orbit parameter information is time-consuming.

**SUMMARY**

Embodiments of this application provide an ephemeris data transmission method, apparatus, and system, a storage medium, and a chip, to design, if a requirement of a terminal for ephemeris data is met, an efficient ephemeris data transmission manner.

According to a first aspect, an ephemeris data transmission method is provided, including: A terminal obtains ephemeris data of a satellite for a plurality of times, where the ephemeris data includes any one of the following information types: orbit status information used to determine a position of the satellite and orbit parameter information indicating an orbit of the satellite; and after obtaining ephemeris data each time, the terminal determines an information type included in the obtained ephemeris data, where in a process in which the terminal obtains ephemeris data of the satellite for a plurality of times, ephemeris data obtained at least once includes the orbit status information, and ephemeris data obtained at least once includes the orbit parameter information.

There are mainly two types of ephemeris data obtained by the terminal. To meet requirements of the terminal for the ephemeris data in a plurality of possible application scenarios, an embodiment of this application provides a method in which in ephemeris data obtained by the terminal for a plurality of times, ephemeris data obtained at least once is orbit status information, and ephemeris data obtained at once is orbit parameter information. It can be learned that, in the method, and in a process of obtaining ephemeris data for a plurality of times, the two types of ephemeris data can be obtained. Therefore, the terminal may implement different ephemeris data processing based on different application scenarios, and the terminal does not need to continuously listen to a navigation message for more than 750 seconds as in the conventional technology, to ensure that ephemeris data is obtained. Therefore, the method provided in this application improves efficiency of obtaining the ephemeris data.

In a possible design, the orbit status information included in the ephemeris data may include at least one or more of the following parameters: a plurality of coordinate parameters in a specified coordinate system, and a velocity parameter in a direction of each coordinate parameter; and the orbit parameter information includes at least the following parameters: a mean anomaly $M_0$ at reference time in a Kepler orbit parameter. Optionally, the specified coordinate system may be preset by the satellite, or may be selected in advance and then notified to the satellite.

In a scenario in which the terminal does not have a high requirement for precision of the obtained ephemeris data, based on different time validity characteristics of different parameters in the ephemeris data, to improve efficiency of obtaining the ephemeris data and reduce time for obtaining the ephemeris data, some basic ephemeris data parameters that have a high time validity requirement can be obtained.

In a possible design, the orbit status information included in the ephemeris data may further include the following parameter: a reference time parameter indicating satellite time; and the orbit parameter information further includes at least one or more of the following parameters: a square root $\sqrt{a}$ of a semi-major axis, an eccentricity e, an orbital plane inclination angle $i_0$, a right ascension of ascending node $\Omega_0$, an argument of perigee $\omega$ in the Kepler orbit parameter, a plurality of perturbation corrections used to correct the Kepler orbit parameter, the reference time parameter indicating the satellite time, and a clock correction parameter for a satellite clock.

Based on different requirements and different precision requirements of the terminal for the obtained ephemeris data, in a scenario in which the terminal has a high requirement for precision, the terminal can obtain more parameters of ephemeris data, to improve precision of the obtained ephemeris data. More detailed parameter information included in the ephemeris data of the satellite obtained by the terminal indicates higher precision and better accuracy of the obtained ephemeris data. This can meet more scenarios requiring high precision.

In a possible design, the terminal may obtain the ephemeris data from new radio (new radio, NR) system information. In this scenario, an implementation in which the terminal determines an information type included in the obtained ephemeris data may include several possible cases.

Case 1: The terminal determines, based on first indication information included in request information, the information type included in the ephemeris data, where the request information is sent to the satellite before the terminal obtains the ephemeris data of the satellite each time, and the first indication information indicates the information type included in the ephemeris data requested by the terminal.

Case 2: The terminal determines, based on second indication information included in the NR system information, the information type included in the ephemeris data, where the second indication information is carried in other system information (other system information, OSI) included in the NR system information.

Case 3: The terminal determines, based on a preset correspondence between a system frame number and an information type included in ephemeris data and a current system frame number included in the NR system information, the information type included in the ephemeris data.

The satellite transmits the ephemeris data to the terminal by using the NR system information. Compared with an implementation in the conventional technology in which the terminal obtains the ephemeris data from the navigation message of the satellite, this implementation has lower time consumption.

In a possible design, the terminal may obtain the ephemeris data from a media access control control element (media access control control element, MAC CE). In this scenario, that the terminal determines an information type included in the obtained ephemeris data may include several possible cases.

Case 1: The terminal determines, based on a first logical channel identifier (logical channel identifier, LCID) value included in the MAC CE, the information type included in the ephemeris data.

Case 2: The terminal determines, based on a second LCID value and third indication information included in the MAC CE, the information type included in the ephemeris data, where the second LCID value indicates that a MAC CE corresponding to the second LCID value is used to carry the ephemeris data, and the third indication information indicates the information type included in the ephemeris data carried by the MAC CE.

The satellite transmits the ephemeris data to the terminal by using the MAC CE. Compared with an implementation in the conventional technology in which the terminal obtains the ephemeris data from the navigation message of the satellite, this implementation has lower time consumption.

According to a second aspect, an embodiment of this application further provides an ephemeris data transmission method, including: A satellite transmits ephemeris data of the satellite to a terminal for a plurality of times, so that after obtaining ephemeris data each time, the terminal determines an information type included in the obtained ephemeris data. The ephemeris data includes any one of the following information types: orbit status information used to determine a position of the satellite, and orbit parameter information indicating an orbit of the satellite; and in a process in which the terminal obtains ephemeris data of the satellite for a plurality of times, ephemeris data obtained at least once includes the orbit status information, and ephemeris data obtained at least once includes the orbit parameter information.

To resolve a problem that obtaining orbit status information or orbit parameter information is time-consuming in the conventional technology, in this application, when the satellite transmits the ephemeris data to the terminal each time, ephemeris data of any one of the two types of ephemeris data is selected for transmission. In addition, to meet implementation of the terminal based on ephemeris data in a plurality of application scenarios, two types of parameter information of ephemeris data are transmitted at least once in a plurality of transmission processes. For example, two types of ephemeris data may be transmitted alternately, or two types of ephemeris data may be transmitted randomly. According to an implementation in which the satellite transmits ephemeris data to the terminal in this embodiment of this application, the terminal does not need to obtain the two types of ephemeris data after continuously listening to a navigation message for 750 seconds as in the conventional technology, so that time for transmitting the ephemeris data can be reduced.

In a possible design, the orbit status information includes at least one or more of the following parameters: a plurality of coordinate parameters in a specified coordinate system, and a velocity parameter in a direction of each coordinate parameter. The orbit parameter information includes at least the following parameters: a mean anomaly *Mo* at reference time in a Kepler orbit parameter. Optionally, the specified coordinate system may be preset by the satellite, or may be selected in advance and then notified to the satellite.

In a scenario in which the terminal does not have a high requirement for precision of the obtained ephemeris data, based on different time validity characteristics of different parameters in the ephemeris data, to improve efficiency of obtaining the ephemeris data and reduce time for obtaining the ephemeris data, the satellite can send some basic ephemeris data parameters that have a high time validity requirement to the terminal.

In a possible design, the orbit status information further includes the following parameter: a reference time parameter indicating satellite time; and the orbit parameter information further includes at least one or more of the following parameters: a square root $\sqrt{a}$ of a semi-major axis, an eccentricity e, an orbital plane inclination angle $i_0$, a right ascension of ascending node $\Omega_0$, an argument of perigee $\omega$ in the Kepler orbit parameter, a plurality of perturbation corrections used to correct the Kepler orbit parameter, the reference time parameter indicating the satellite time, and a clock correction parameter for a satellite clock.

Based on different requirements and different precision requirements of the terminal for the obtained ephemeris data, in a scenario in which the terminal has a high precision requirement, the satellite can transmit more parameter information than a basic ephemeris data parameter to the terminal, so that the terminal can meet more application scenarios with higher precision requirements by using ephemeris data with higher precision.

In a possible design, that a satellite transmits ephemeris data of the satellite to a terminal includes: After receiving request information sent by the terminal each time, the satellite determines, based on first indication information included in the request information, an information type included in the ephemeris data, and transmits the ephemeris data of the information type to the terminal. The first request information indicates the information type included in the ephemeris data requested by the terminal; or the satellite transmits the ephemeris data by using other system information OSI included in an NR system information. The OSI includes second indication information, and the second indication information indicates an information type included in the ephemeris data; or the satellite determines, based on a preset correspondence between a system frame number and an information type included in ephemeris data and a current system frame number included in the sent NR system information, an information type included in the sent ephemeris data, and transmits the ephemeris data including the information type to the terminal.

To reduce time consumption in a process in which the satellite transmits ephemeris data to the terminal, the satellite can transmit the ephemeris data based on a transmission requirement of the NR system information.

In a possible design, that a satellite transmits ephemeris data of the satellite to a terminal includes: The satellite sends the ephemeris data based on the MAC CE, and indicates, by using a first LCID value included in the MAC CE, an information type included in the ephemeris data; or the satellite sends the ephemeris data based on the MAC CE, and indicates, by using a second LCID value and third indication information in the MAC CE, an information type included in the ephemeris data. The second LCID value indicates that a MAC CE corresponding to the second LCID value is used to carry the ephemeris data, and the third indication information indicates the information type included in the ephemeris data carried by the MAC CE.

To reduce time consumption in a process in which the satellite transmits ephemeris data to the terminal, the satellite can transmit the ephemeris data based on a transmission requirement of the MAC CE.

In a possible design, the MAC CE includes a fixed-length MAC CE or a variable-length MAC CE; and that the satellite transmits the ephemeris data to the terminal based on a MAC CE includes: if a parameter quantity included in the ephemeris data is less than or equal to a parameter quantity threshold allowed by the fixed-length MAC CE, the satellite transmits the ephemeris data based on the fixed-length MAC CE or the variable-length MAC CE. If the parameter quantity included in the ephemeris data is greater than the parameter quantity threshold allowed by the fixed-length MAC CE, the satellite transmits the ephemeris data based on the variable-length MAC CE.

This embodiment can implement a scenario in which the ephemeris data transmitted by the satellite to the terminal includes more parameters, so that a request of the terminal for ephemeris data including a plurality of parameters is met, to meet a high-precision requirement of the terminal.

According to a third aspect, an embodiment of this application provides an ephemeris data transmission apparatus, including modules/units configured to perform the method in any one of the first aspect or the possible designs of the first aspect. For example, a transceiver unit is included and is configured to obtain ephemeris data of a satellite for a plurality of times; and a processing unit is configured to: after the transceiver unit obtains ephemeris data each time, determine an information type included in the obtained ephemeris data.

According to a fourth aspect, an embodiment of this application provides an ephemeris data transmission apparatus, including modules/units configured to perform the method in any one of the second aspect or the possible designs of the second aspect. For example, a transceiver unit is included and is configured to transmit ephemeris data of a satellite to a terminal for a plurality of times.

According to a fifth aspect, an embodiment of this application further provides a communication device. The communication device may be the terminal or the satellite in the foregoing method embodiments, or a chip disposed in the terminal or the satellite. The communication device may include a transceiver and a processor. Optionally, the communication device further includes a memory. The memory is configured to store a computer program or instructions. The processor is separately coupled to the memory and the transceiver. When the processor executes the computer program or the instructions, the communication device is enabled to perform the method performed by the terminal or the satellite in the foregoing method embodiments.

According to a sixth aspect, an embodiment of this application further provides a computer program product. The computer program product includes computer program code. When the computer program code is run on a computer, the computer is enabled to perform the method according to any one of the foregoing aspects.

According to a seventh aspect, an embodiment of this application further provides a computer-readable storage medium, where the computer-readable storage medium stores a computer program, and when the computer program is run, the method according to any one of the foregoing aspects is implemented.

According to an eighth aspect, an embodiment of this application further provides a chip. The chip includes a logic circuit and an input/output interface. The input/output interface is configured to receive code instructions or information, and the logic circuit is configured to execute the code instructions or perform, based on the information, any possible design of the first aspect or the second aspect in the foregoing method embodiments.

According to a ninth aspect, an embodiment of this application further provides an ephemeris data transmission system. The system may include a terminal that performs the method according to any one of the first aspect and the possible implementations of the first aspect, and a satellite that performs the method according to any one of the second aspect and the possible implementations of the second aspect.

For technical effect that can be achieved in any one of the third aspect to the ninth aspect and any possible implementation of the third aspect to the ninth aspect, refer to descriptions of technical effect that can be achieved in the first aspect and corresponding implementations of the first aspect, or refer to descriptions of technical effect that can be achieved in the second aspect and corresponding implementations of the second aspect. Details are not described herein again.

**BRIEF DESCRIPTION OF DRAWINGS**

FIG. 1 is a diagram of an application scenario of a satellite network according to an embodiment of this application;
FIG. 2 is a schematic flowchart of an ephemeris data transmission method according to an embodiment of this application;
FIG. 3 is a schematic flowchart of implementing a RACH;
FIG. 4 is a schematic diagram of a MAC PDU data format;
FIG. 5a and FIG. 5b each are a schematic diagram of a transmission process based on NR system information according to an embodiment of this application;
FIG. 6 is a schematic diagram of a correspondence between an SFN and an information type included in ephemeris data according to an embodiment of this application;
FIG. 7 is a schematic diagram of a structure of an ephemeris data transmission apparatus according to an embodiment of this application;

FIG. 8 is a schematic diagram of a structure of another ephemeris data transmission apparatus according to an embodiment of this application;

FIG. 9 is a schematic diagram of a structure of still another ephemeris data transmission apparatus according to an embodiment of this application; and

FIG. 10 is a schematic diagram of a structure of a chip according to an embodiment of this application.

## DESCRIPTION OF EMBODIMENTS

The following further describes this application in detail with reference to accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

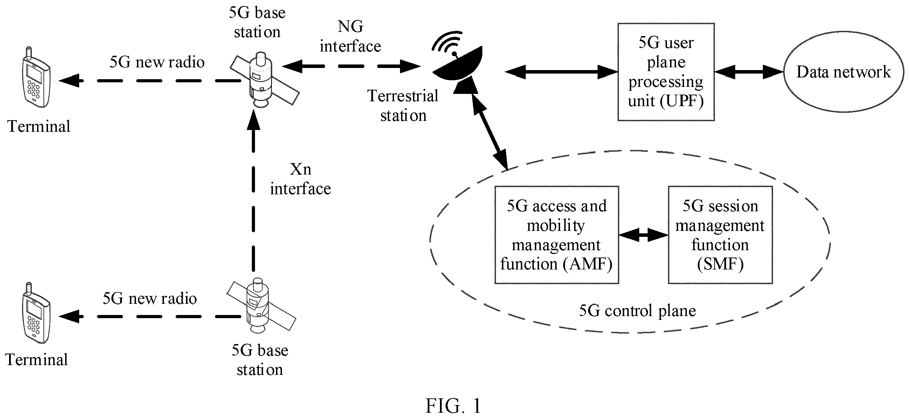

In addition, the word "example" in embodiments of this application is used to represent giving an example, an illustration, or a description. Any embodiment or design scheme described as an "example" in this application should not be explained as being more preferred or having more advantages than another embodiment or design scheme. Exactly, the word "example" is used to present a concept in a specific manner. FIG. 1 is a diagram of an application scenario of a satellite network according to an embodiment of this application. An application scenario of the satellite network is briefly described, to better understand embodiments of this application. It may be learned from content shown in FIG. 1 that a terrestrial mobile terminal may access a satellite network through 5G new radio. In the satellite network, a 5G base station may be deployed on a satellite, and is connected to a terrestrial core network through a radio link. In addition, there is also a radio link between satellites. Therefore, interaction such as signaling interaction and user data transmission between base stations may be completed through the radio link. The network elements and interfaces in FIG. 1 are briefly described as follows:

(1) Terminal: A terminal includes a mobile device that supports a 5G new radio. The terminal may access a satellite network through a 5G new radio, and initiate calls, access the Internet, and the like.

A terminal device includes a device that provides a voice and/or data connectivity for a user. Specifically, the terminal device includes a device that provides the voice for the user, or includes a device that provides the data connectivity for the user, or includes a device that provides the voice and the data connectivity for the user. For example, the terminal device may include a handheld device having a wireless connection function, or a processing device connected to a wireless modem. The terminal device may communicate with a core network through a radio access network (radio access network, RAN), and exchange a voice or data with the RAN, or exchange a voice and data with the RAN. The terminal device may include user equipment (user equipment, UE), a wireless terminal device, a mobile terminal device, a device-to-device (device-to-device, D2D) communication terminal device, a vehicle to everything (vehicle to everything, V2X) terminal device, a machine-to-machine/machine-type communication (machine-to-machine/machine-type communication, M2M/MTC) terminal device, an Internet of Things (Internet of things, IoT) terminal device, a light terminal device (light UE), a subscriber unit (subscriber unit), a subscriber station (subscriber station), and a mobile station (mobile station), a remote station (remote station), an access point (access point, AP), a remote terminal (remote terminal), an access terminal (access terminal), a user terminal (user terminal), a user agent (user agent), or a user device (user device). For example, the terminal device may include a mobile phone (or be referred to as a "cellular" phone), a computer with a mobile terminal device, or a portable, pocket-sized, handheld, or computer built-in mobile apparatus, for example, a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), and the like. The terminal device further includes a limited device, for example, a device with low power consumption, a device with a limited storage capability, or a device with a limited computing capability. For example, the terminal device includes information sensing devices such as a barcode, radio frequency identification (radio frequency identification, RFID), a sensor, a global positioning system (global positioning system, GPS), or a laser scanner.

By way of example and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on a body or integrated into clothes or an accessory of a user. The wearable device is not merely a hardware device, but is used to implement a powerful function through software support, data exchange, and cloud interaction. In a broad sense, the wearable intelligent devices include full-featured and large-size devices that can implement all or some of functions without depending on smartphones, for example, smart watches or smart glasses, and include devices that focus on only a specific type of application function and need to collaboratively work with other devices such as smartphones, for example, various smart bands, smart helmets, or smart jewelry for monitoring physical signs.

If the various terminal devices described above are located on a vehicle (for example, placed in the vehicle or installed in the vehicle), the terminal devices may be considered as vehicle-mounted terminal devices. For example, the vehicle-mounted terminal devices are also referred to as on-board units (on-board units, OBUs). In embodiments of this application, the terminal device may further include a relay (relay). Alternatively, it may be understood that any device that can perform data communication with a base station may be considered as the terminal device.

In embodiments of this application, an apparatus configured to implement a function of the terminal device may be a terminal device, or may be an apparatus, for example, a chip system, that can support the terminal device in implementing the function. The apparatus may be installed in the terminal device. In embodiments of this application, the chip system may include a chip, or may include a chip and another discrete device. In the technical solutions provided in embodiments of this application, the technical solutions provided in embodiments of this application are described by using an example in which the apparatus configured to implement the function of the terminal is the terminal device.

(2) 5G base station: A 5G base station is mainly a satellite device that provides a wireless access service. Like a terrestrial base station, the satellite device may provide a wireless coverage service for a terminal, for example, the satellite device schedules a radio resource for an access terminal, and provides a reliable wireless transmission protocol and a data encryption protocol.

The 5G base station in embodiments of this application may be deployed on a satellite or some functions of the 5G base station may be deployed on a satellite, to provide a communication network with seamless coverage for the terminal. In this application scenario, the terminal may obtain ephemeris data of the satellite for a plurality of times through data transmission between the terminal and the 5G base station, for example, in a data transmission manner such as sending request information to the satellite by the terminal or sending broadcast information to the terminal by the satellite.

(3) 5G core network: A 5G core network is used for access control, mobility management, session management, user security authentication, charging, and the like. The 5G core network has a plurality of functional units, and may be divided into a control-plane functional entity and a user-plane functional entity. The control-plane functional entity mainly includes: an access and mobility management function (access and mobility management function, AMF) that is responsible for user access management, security authentication, mobility management, and the like; and a session management function (session management function, SMF), used to provide service continuity and the like. The user-plane functional entity mainly includes a user plane processing unit (user port function, UPF) that is responsible for managing functions such as user-plane data transmission, traffic statistics, and security eavesdropping.

(4) Terrestrial station: A terrestrial station is mainly responsible for forwarding signaling and service data between a satellite and a 5G core network. That is, a basic function of the terrestrial station is to transmit a signal to the satellite and receive a signal forwarded by another terrestrial station through the satellite.

(5) 5G new radio: A 5G new radio indicates a radio link between a terminal and a base station, so that the terminal and the base station implement interaction such as signaling exchange and user data transmission, through the 5G new radio.

(6) Xn interface: An Xn interface is an interface between 5G base stations, and is mainly used to implement signaling exchange such as handover.

(7) NG interface: An NG interface indicates an interface between a 5G base station and a 5G core network, and is mainly used to implement exchange of signaling such as non-access stratum (non-access stratum, NAS) of a core network and transmit service data of a user.

Network architectures and service scenarios described above in embodiments of this application are intended to describe the technical solutions in embodiments of this application more clearly, and do not constitute any limitation on the technical solutions provided in embodiments of this application. A person of ordinary skill in the art may learn that the technical solutions provided in embodiments of this application are also applicable to a similar technical problem as a network architecture evolves and a new service scenario emerges.

Based on the description in the background, there are two main application scenarios for obtaining ephemeris data of the satellite. One is used for satellite positioning, and is implemented by obtaining orbit status information of the satellite. The other is used for predicting a running status of the satellite, and may be implemented by obtaining orbit parameter information of the satellite. In the conventional technology, parameters of the two application scenarios may be obtained from complete ephemeris data included in a navigation message received by a user from a satellite. However, in the conventional technology, obtaining orbit status information and orbit parameter information is time-consuming.

The navigation message is broadcast by using a global positioning system (global positioning system, GPS) satellite, and the navigation message includes a broadcast ephemeris and prediction ephemeris. The broadcast ephemeris may be used for GPS real-time positioning calculation, and includes complete orbital status information. The prediction ephemeris is used to predict a position of a GPS satellite in a long time period, and includes complete orbit parameter information. Therefore, it can be accurately known that, in an observed location and an observed time period, a situation of the GPS satellite that can be received by a GPS receiver. A data format of the navigation message includes: a main frame, a subframe, and a word. A length of each main frame navigation message is 1500 bits, and a broadcast rate is 50 bibs. Therefore, it takes 30s to send a main frame message. A complete navigation message includes 25 main frames and has 37,500 bits in total. Therefore, the terminal needs to continuously listen to the navigation message for more than 750s to obtain complete ephemeris data (including the complete broadcast ephemeris and prediction ephemeris). Although the complete ephemeris data with high precision can be obtained in a technical solution provided in the conventional technology, in some application scenarios, when a service precision requirement is met, the terminal may implement satellite positioning by obtaining partial orbit status information in the complete broadcast ephemeris, or implement satellite prediction by obtaining partial orbit parameter information in the complete prediction ephemeris, without obtaining the complete ephemeris data. Therefore, the technical solution used in the conventional technology is time-consuming, and causes high terminal overheads.

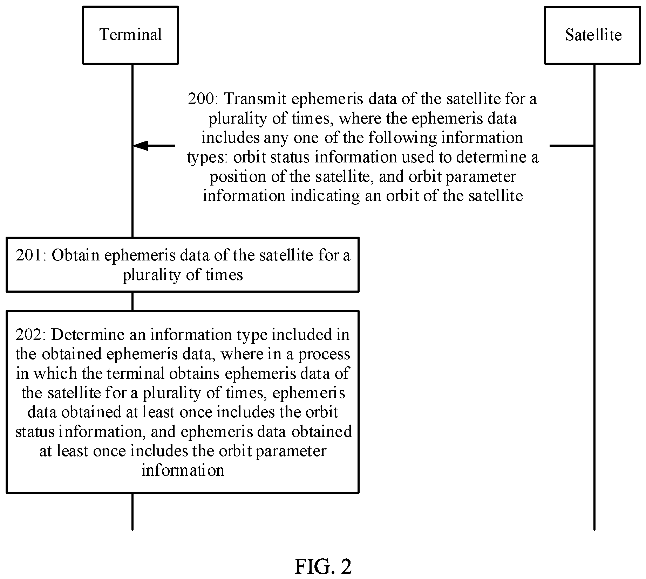

In view of this, to resolve the time problem in the conventional technology, embodiments of this application provide an ephemeris data transmission method. A terminal and a satellite pre-agree an ephemeris data transmission manner, or a terminal sends request information to a satellite based on a service requirement, to reduce time for transmitting the ephemeris data, and reduce overheads of the terminal. FIG. 2 is a schematic flowchart of an ephemeris data transmission method according to an embodiment of this application. The method includes the following steps.

Step 200: A satellite transmits ephemeris data of a satellite to a terminal for a plurality of times, where the ephemeris data includes any one of the following information types: orbit status information used to determine a position of the satellite, and orbit parameter information indicating an orbit of the satellite.

Step 201: The terminal obtains ephemeris data of the satellite for a plurality of times.

It should be noted that, because the satellite moves around the earth, ephemeris data of the satellite has time validity. Therefore, the terminal needs to obtain the ephemeris data of the satellite for a plurality of times based on the time validity of the ephemeris data. For example, if the time validity of the ephemeris data is 1 hour, the terminal needs to re-obtain ephemeris data of the satellite per hour at most.

The orbit status information used to determine the position of the satellite is referred to as orbit status information of a type 1, and may include at least the following parameters: a plurality of coordinate parameters in a specified coordinate system, and a velocity parameter in a direction of each coordinate parameter. The specified coordinate system is preset by the satellite. For example, the specified coordinate system may be pre-agreed by the satellite and the terminal. For example, if the specified coordinate system pre-agreed by the terminal and the satellite is a three-dimensional coordinate system, the plurality of coordinate parameters may indicate three position coordinate parameters *(x, y, z)*, and a velocity parameter in a direction of each coordinate parameter may indicate by using *(Vx, Vy, Vz)*. The orbit status information of the satellite has a characteristic of high positioning position precision, and therefore can be directly used in the technical fields such as satellite positioning and satellite navigation.

In addition, if the terminal has a requirement for higher precision and higher accuracy of the orbit status information, the orbit status information may further include reference time parameter indicating satellite time. The terminal may determine, by using the reference time parameter, a reference time corresponding to obtaining the orbit status information, to determine the time validity of the orbit status information based on a comparison between the reference time and the time for obtaining the ephemeris data. It should be noted that, because the satellite moves around the earth, ephemeris data (orbit status information) of the satellite is periodically updated.

The orbit parameter information indicating the orbit in which the satellite is located is referred to as orbital status information of a type 2, and may include at least a mean anomaly $M_0$ at reference time in the Kepler orbit parameter. $M_0$ is used to determine an angle from a perigee to a point where the satellite is located at the specified reference time. Because the satellite keeps moving around the earth, $M_0$ has a dynamic change characteristic, that is, has a time validity requirement. During implementation, the terminal may obtain $M_0$, and determine the orbit where the satellite is located with reference to other locally pre-stored Kepler orbit parameter information, and then determine, based on the orbit, to predict a running status of the satellite. It should be noted that, if the terminal does not have other locally pre-stored Kepler orbit parameter information, when the terminal obtains the ephemeris data of the satellite for the first time, an implementation of requesting the satellite may be used; or when data transmission is pre-agreed between each terminal and the satellite for the first time, ephemeris data obtained by the terminal includes six pieces of Kepler orbit parameter information, and the obtained Kepler orbit parameter information is stored locally for predicting the running status of the satellite.

In another implementation, the orbit parameter information of the satellite obtained by the terminal for a plurality of times may further include at least one of the following parameters:

(1) a square root $\sqrt{a}$ of a semi-major axis in the Kepler orbit parameter, used to determine a size of the orbit;

(2) an eccentricity e in the Kepler orbit parameter, used to define a shape of the orbit;

(3) an orbital plane inclination angle $i_0$ in the Kepler orbit parameter, used to indicate an included angle between an equatorial plane and a satellite orbital plane;

(4) a right ascension of ascending node $\Omega_0$ in the Kepler orbit parameter, used to indicate an angle from a first point of Aries to a point of the satellite orbit passing through the equator from south to north;

(5) an argument of perigee $\omega$ in the Kepler orbit parameter, used to indicate an angle from an ascending node to a perigee in the orbital plane;

(6) a plurality of perturbation corrections used to correct the Kepler orbit parameter, used to calibrate the obtained Kepler orbit parameter in a scenario in which high-precision ephemeris data is required, to obtain ephemeris data with higher precision and more accuracy;

(7) a reference time parameter indicating the satellite time, where the reference time parameter may be used to determine a time point at which the orbit parameter information of the satellite is obtained, to ensure time validity of the orbit parameter information; and because the satellite moves around the earth, ephemeris data of the satellite is updated periodically; and

(8) a clock correction parameter for a satellite clock, used to determine a clock difference value between the satellite clock and a terrestrial standard clock, to ensure time synchronization.

The specific orbit parameter information of the satellite obtained by the terminal may be determined based on a service requirement of the terminal and performance of the terminal. For example, in a scenario in which the terminal has a low requirement on precision of the orbit parameter information, the orbit parameter information obtained by the terminal for a plurality of times may include at least dynamically changing $M_0$ based on satellite motion. Alternatively, the terminal may further pre-agree, based on a requirement of the terminal device for precision of the orbit parameter information, with the satellite on specific orbit parameter information included in the orbit parameter information that the terminal needs to obtain each time, or when the terminal sends request information to the satellite, indication information of the orbit parameter information that the terminal needs to obtain is carried, to meet accuracy of the orbit parameter information obtained by the terminal. For example, in another possible scenario, the orbit parameter information obtained by the terminal each time may not only include $M_0$ in the Kepler orbit parameter, but also include other Kepler orbit parameters, that is $\sqrt{a}$ , e, $i_0$, $\Omega_0$ and $\omega$.

Step 202: After obtaining ephemeris data each time, the terminal determines an information type included in the obtained ephemeris data, in a process in which the terminal obtains ephemeris data of the satellite for a plurality of times, ephemeris data obtained at least once includes the orbit status information, and ephemeris data obtained at least once includes the orbit parameter information.

Based on the implementation provided in this application, at least one orbit status information and at least one orbit parameter information may exist in the ephemeris data obtained by the terminal for a plurality of times. Because the terminal may receive the ephemeris data of different types, after receiving ephemeris data each time, the terminal needs to determine the information type included in the ephemeris data. After the information type is determined, different applications are implemented based on different types of ephemeris data. For example, the terminal may obtain the ephemeris data of the satellite carried in new radio (new radio, NR) system information or a media access control control element (media access control control element, MAC CE). A specific transmission manner is described below with reference to an embodiment.

To clearly understand how the terminal obtains the ephemeris data of the satellite based on the NR system information in this embodiment of this application, the NR system information is first briefly described.

In an NR system, the NR system information carried on a physical broadcast channel (physical broadcast channel, PBCH) includes: a master information block (master information block, MIB) and a series of NR system information blocks (system information blocks, SIBs). The SIB includes remaining minimum NR system information (remaining minimum system information, RMSI), other NR system information (other system information, OSI), and the like. The RMSI is similar to a SIB 1 in a long term evolution (long term evolution, LTE) system, and is used to broadcast uplink initial bandwidth part (bandwidth part, BWP) information. An initial BWP includes content such as channel configuration information, ratio information of a time division duplexing (time division duplexing, TDD) cell, and other necessary information for UE to access a network. The OSI is similar to a SIB 2 to a SIB 13 in the LTE system, and specific information carried by the OSI and a sending period are indicated by the RMSI.

In an implementation process of this application, the satellite may carry the ephemeris data through the OSI in the NR system information, and indicate, through the RMSI, that the OSI of the terminal includes the ephemeris data and the sending period of the ephemeris data, so that the terminal obtains the ephemeris data of the satellite from the OSI.

In a possible implementation, if the terminal obtains the ephemeris data of the satellite from the NR system information, that the terminal determines an information type included in the obtained ephemeris data may include the following several cases:

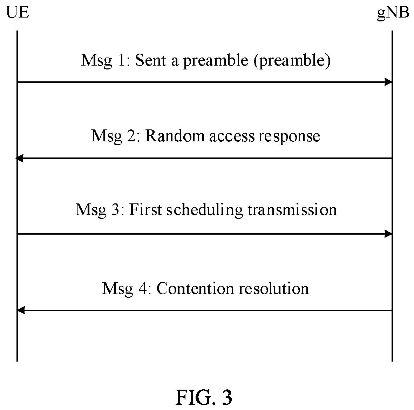

Case 1: The OSI can be further classified into broadcast OSI (broadcast OSI) and on-demand OSI (on-demand OSI). A UE request of the on-demand OSI may be sent based on an existing random access channel (random access channel, RACH) implementation procedure. With reference to a schematic flowchart of implementing a RACH in the conventional technology shown in FIG. 3, UE may carry a request message through an uplink message in a four-step RACH, that is, the first step RACH (Msg 1) or the third step RACH (Msg 3), so that the UE requests specific OSI from a gNB (a name of a 5G base station defined in a 3rd generation partnership project (3rd generation partnership project, 3GPP) protocol) based on a service requirement. Each step is referred to as a message (message), and four steps are referred to as Msg 1 to Msg 4 in a related standard.

In this embodiment of this application, the terminal may send the on-demand OSI to the satellite by using the RACH. The terminal sends, to the satellite based on a service requirement before obtaining ephemeris data of the satellite each time, request information used to request the ephemeris data of the satellite. In addition, the request information may further carry indication information indicating the type of information obtained by the terminal.

After receiving the request information sent by the terminal each time, the satellite determines, based on the request information, to send the ephemeris data to the terminal, and may further determine, based on the indication information carried in the request information, the information type included in the ephemeris data requested by the terminal, to send to the terminal, the information type requested by the terminal indicated by the indication information. For example, the terminal sends request information to the satellite, and indicates, by using the indication information, that the satellite requests orbit status information of a type 1. In this case, the satellite sends values of a plurality of coordinate parameters and a plurality of velocity parameters included in the orbit status information to the terminal.

In this embodiment, the terminal requests the ephemeris data from the satellite based on on-demand OSI, so that the satellite can transmit specific type of ephemeris data to the terminal. This can improve efficiency of applying ephemeris data by the terminal, reducing time for obtaining the ephemeris data by the terminal, and reducing overheads of the terminal.

Case 2: Like the PBCH and the RMSI, the broadcast OSI is periodically broadcast and sent by the gNB. In addition, configuration information of the broadcast OSI is carried in the RMSI. Based on this, in this embodiment of this application, the terminal may further obtain the ephemeris data from the NR system information periodically delivered by the satellite. To be specific, after obtaining, from the RMSI, the configuration information of the broadcast OSI, the terminal determines, based on the configuration information of the broadcast OSI, a position of the ephemeris data carried in the broadcast OSI, and obtains the ephemeris data of the satellite from the position.

When the satellite sends the ephemeris data carried in the broadcast OSI included in the NR system information, to help the terminal clearly determine the information type included in the obtained ephemeris data, the satellite may include customized indication information in the ephemeris data when transmitting the ephemeris data, to indicate information type included in the ephemeris data sent by the terminal each time.

In this embodiment, the satellite transmits the ephemeris data to the terminal based on the broadcast OSI, so that the satellite selectively transmits different types of ephemeris data to the terminal. In addition, the implementation of explicit indication improves efficiency of obtaining ephemeris data by the terminal.

Case 3: A length of the MIB included in the NR system information is 24 bits (bits), and the MIB includes content such as a downlink system bandwidth, a physical hybrid automatic repeat request indicator channel (physical hybrid arq indicator channel, PHICH) size, and most significant bit of a system frame number (system frequency number, SFN).

Based on the SFN in the NR system information, the terminal and the satellite may preset a correspondence between a system frame number and an information type included in ephemeris data. Based on the preset correspondence, when the satellite transmits NR system information each time, the satellite determines, based on the SFN included in the transmitted NR system information, an information type included in ephemeris data transmitted this time, and sends ephemeris data of the information type to the terminal.

After receiving the NR system message sent by the satellite each time, the terminal determines the SFN included in the NR system message, and determines, based on the preset correspondence, the information type included in the ephemeris data corresponding to the SFN.

In this embodiment, the satellite transmits the ephemeris data to the terminal based on the preset correspondence between an SFN and an information type included in ephemeris data, so that the satellite selectively transmits different types of ephemeris data to the terminal. In addition, the implementation of implicit indication improves efficiency of obtaining ephemeris data by the terminal.

In another possible implementation, the terminal may obtain the ephemeris data of the satellite based on the MAC CE. To better understand how the terminal obtains the ephemeris data based on the MAC CE in this embodiment of this application, the MAC CE is also briefly described.

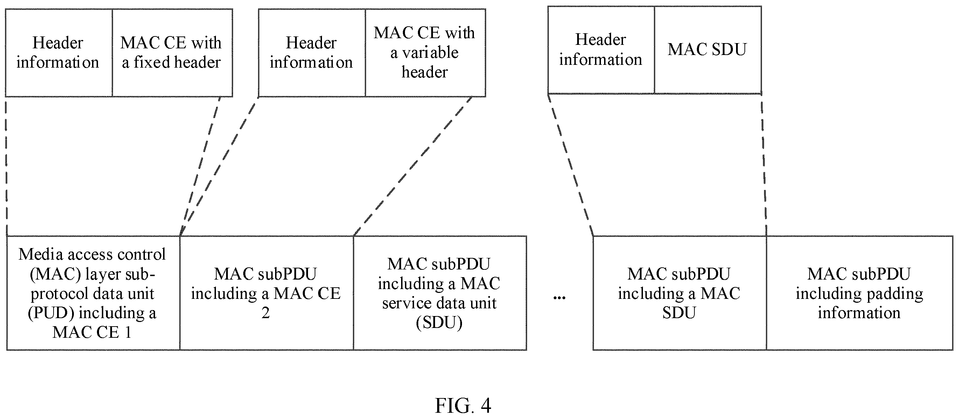

A MAC CE belongs to a MAC protocol data unit (protocol data Unit, PDU). One MAC PDU corresponds to one transport block, and the MAC PDU includes one or more MAC subPDUs. FIG. 4 is a schematic diagram of a MAC PDU data format. Each MAC subPDU may be further divided into two types: a MAC CE and a MAC service data unit (service data unit, SDU). The MAC CE is mainly used to send control information defined in a MAC layer protocol, for example, a MAC CE for timing adjustment (timing advance, TA) control. The MAC SDU is mainly used to transmit upper-layer data, for example, radio resource control (radio resource control, RRC) data.

If the terminal obtains the ephemeris data from the MAC CE, that the terminal may determine an information type included in the obtained ephemeris data may include the following several cases:

Case 1: Because the MAC CE includes a logical channel identifier (logical channel identifier, LCID) field, when transmitting the ephemeris data to the terminal, the satellite may indicate, by using an LCID value, the information type included in the ephemeris data delivered each time. For example, if the LCID value is n1, it indicates that the ephemeris data transmitted by the MAC CE is orbit status information; or if the LCID value is n2, it indicates that the ephemeris data transmitted by the MAC CE is orbit parameter information.

After receiving the MAC CE of the satellite, the terminal determines the LCID value included in the MAC CE, and determines, based on the LCID value, the information type included in the ephemeris data.

Case 2: Based on the implementation of Case 1, the satellite may further indicate, by using an LCID value and customized indication information in the MAC CE, the information type included in the transmitted ephemeris data. During implementation, the satellite indicates, by using the LCID value, that the MAC CE received by the terminal is used to transmit the ephemeris data, and indicates, by using the customized indication information included in the MAC CE, the information type included in the ephemeris data. For example, if the customized indication information is 1, it indicates that the transmitted ephemeris data is orbit status information. If the customized indication information is 0, it indicates that the transmitted ephemeris parameter is orbit parameter information.

After receiving the MAC CE transmitted by the satellite, the terminal determines, by using the LCID value in the MAC CE, the transmitted ephemeris data, and further determines, by using the customized indication information in the MAC CE, the information type included in the transmitted ephemeris data.

It should be noted that the orbit status information of the satellite is used to determine the positioning position of the satellite. During implementation, satellite position information with high precision is obtained through spatial coordinates and a velocity parameter of the satellite, but the orbit status information cannot be directly used for satellite prediction. The orbit parameter information of the satellite may be used to conveniently predict the running status of the satellite by using the Kepler orbit parameter. However, because the orbit parameter information does not have a characteristic of high positioning precision, the orbit parameter information cannot be directly used in an application scenario that requires high positioning precision, such as satellite positioning. If the terminal needs to obtain the positioning position of the satellite, the terminal needs to perform calculation based on the orbit parameter information to obtain the spatial coordinates of the satellite. Therefore, an additional operation of the terminal is required. There is a clear implementation in the conventional technology in which the terminal obtains the spatial coordinates of the satellite through calculation based on the orbit parameter information, and this is not an improvement point of this application. Therefore, details are not described in this application.

Based on the foregoing description, different types of ephemeris data have different functions and applications. Therefore, to meet more application scenarios and efficiently obtain ephemeris data required by the terminal, in a process of obtaining ephemeris data for a plurality of times, the obtained ephemeris data for a plurality of times includes two types of ephemeris data. Therefore, the terminal can conveniently perform satellite position in the field such as satellite navigation; or the terminal conveniently performs satellite prediction, to predict the running status of the satellite, and the like.

During implementation of this application, different types of ephemeris data may be transmitted between the terminal and the satellite by using the NR system information and the MAC CE, so that the terminal can be compatible with the two types of ephemeris data. This can implement more efficient application of ephemeris data. The following further describes in detail the ephemeris data transmission method provided in embodiments of this application with reference to a transmission manner of the NR system information and the MAC CE in the MAC PDU.

**Embodiment 1**

The terminal may obtain ephemeris data of a satellite by sending a request message to the satellite. During implementation, the terminal may send the request message to the satellite through the first step RACH (Msg 1) or the third step RACH (Msg 3) of the four-step RACH procedure based on a service requirement of the terminal.

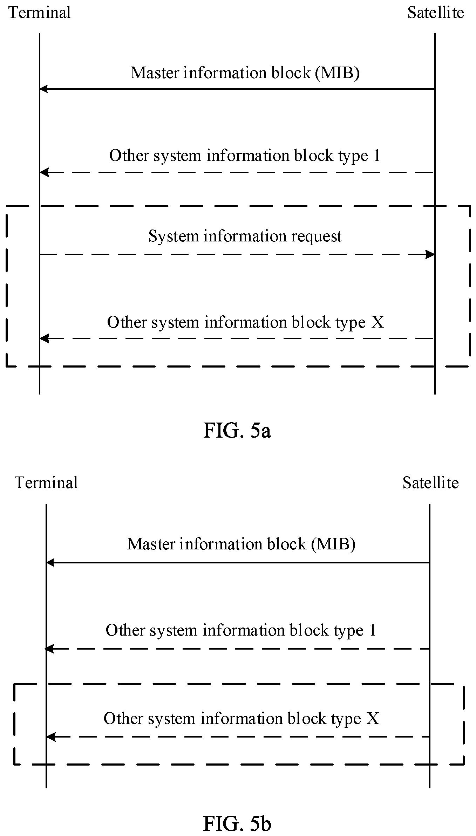

After receiving the request message of the terminal, the satellite may deliver the ephemeris data to the terminal through other system information blocks. FIG. 5a is a schematic diagram of a transmission process based on an NR system information according to this embodiment of this application. Based on the transmission process shown in FIG. 5a, the terminal requests, for the satellite, ephemeris data carried in other system information block other than the master information block MIB. After receiving the request information of the terminal, the satellite transmits the ephemeris data to the terminal by using the system information block type X in the other system information block, so that after obtaining the ephemeris data, the terminal can implement applications such as satellite positioning or satellite prediction based on the ephemeris data.

During implementation, this application defines a new NR system information format. The system information is transmitted by using other system information block type X in FIG. 5a, for example, "SIB_ephemeris" shown in Table 1 below indicating NR system information newly defined for transmitting ephemeris data.

**Table 1**

| | |
|---|---|
| SIB_ephemeris: : = | SEQUENCE { |
| Format_indicator | BOOLEAN, |
| Ephemeris_data: : = | CHOICE { |
| Orbit_info | Orbit_Info, |
| Orbit_state_info | Orbit_State_Info, |

```
                }

        Satellite_Identifier              BIT STRING (SIZE (16))

                }

Orbit_Info: : =                           SEQUENCE {

        Square_root_of_seme_axis          BIT STRING (SIZE (12))

        Eccentricity                      BIT STRING (SIZE (12))

        Longitude_of_ascending_node       BIT STRING (SIZE (12))

        Inclination_angle                 BIT STRING (SIZE (12))

        Argument_of_perigee               BIT STRING (SIZE (12))

        Mean_anomaly                      BIT STRING (SIZE (12))

        ReferenceTime_ephemeris           BIT STRING (SIZE (12))

                }

Orbit_State_Info: : =                     SEQUENCE {

        X_position                        BIT STRING (SIZE (12))

        Y_position                        BIT STRING (SIZE (12))

        Z_position                        BIT STRING (SIZE (12))

        X_velocity                        BIT STRING (SIZE (12))

        Y_velocity                        BIT STRING (SIZE (12))

        Z_velocity                        BIT STRING (SIZE (12))

        ReferenceTime_ephemeris       BIT STRING (SIZE (12))

                }
```

Content of "SIB_ephemeris" shown in Table 1 includes a "Format indicator" field. The field indicates indication information, and indicates a type of ephemeris data delivered by a satellite. Based on the content described above, it can be determined that the type of the ephemeris data includes two possible types: orbit status information and orbit parameter information. During implementation, the satellite indicates types of the transmitted ephemeris data through different values displayed in the Format indicator field. For example, when a value of a BOOLEAN (Boolean logical system, which may be implemented as 1 and 0 separately to indicate different content) field is displayed as 1, it may indicate that the ephemeris data type delivered by the satellite is the orbital status information; or when a value of the BOOLEAN field is displayed as 0, it may indicate that the ephemeris data type delivered by the satellite is the orbit parameter information.

The "Satellite_Identifier" field shown in Table 1 is a satellite identifier, and indicates which satellite delivers the transmitted ephemeris data, so that the terminal determines, after receiving the ephemeris data, the satellite that sends the ephemeris data.

"Orbit_info" included in content of "SIB_ephemeris" content shown in Table 1 may indicate orbit parameter information, and "Orbit_state_info" may indicate orbit status information. "Orbit_info" specifically includes:

Square_root_of_seme_axis (which may indicate a square root $\sqrt{a}$ of a semi-major axis), Eccentricity (which may indicate an eccentricity e), Longitude_of_ascending_node (which may indicate a right ascension of ascending node $\Omega_0$), Inclination_angle (which may indicate an orbital plane inclination angle $i_0$), Mean_anomaly (which may indicate a mean anomaly $M_0$ at reference time), and ReferenceTime_ephemeris (which may indicate a reference time parameter). "Orbit_state_info" specifically includes: X_position, Y_position, and Z_position (which may indicate a plurality of coordinate parameters in a specified coordinate system, and in Table 1, an example in which the specified coordinate system is a three-dimensional coordinate system is used); X_velocity, Y_velocity, and Z_velocity (which may indicate a velocity parameter in a direction of each coordinate parameter); and ReferenceTime_ephemeris (which may indicate a reference time parameter).

After determining the information type included in the ephemeris data to be transmitted to the terminal, the satellite transmits, by using each field defined in the NR system information format shown in Table 1, each parameter value included in the ephemeris data. In a possible implementation, the satellite randomly delivers different types of ephemeris data to the terminal; or the satellite delivers different types of ephemeris parameters to the terminal, and in a delivery process, a "Format_indicator" field indicates a type of delivered information.

After receiving a system message, the terminal determines, based on a value displayed by the "Format indicator" field in the "SIB_ephemeris" system message, the type of the ephemeris data delivered by the satellite this time, and obtains parameter information data of the corresponding type based on the determined type.

According to Embodiment 1, the terminal sends the request message to the satellite, to request the satellite to deliver the ephemeris data. When the satellite delivers the ephemeris data through the NR system message, the Format indicator field in the customized SIB_ephemeris system information indicates the type of the ephemeris data to be delivered this time. Based on the method, the terminal can dynamically obtain different types of ephemeris data, so that after determining the type of the ephemeris data, the terminal obtains the ephemeris data based on the determined type, and separately performs operations such as satellite prediction or communication parameter compensation based on functions and attributes of the different types.

In addition, in another implementation, when sending the request information, the terminal may further carry indication information in the request information. The indication information indicates the information type included in the ephemeris data requested by the satellite terminal. After receiving the request information that is sent by the terminal and that carries the indication information, the satellite delivers, based on the indication information included in the request information, the type of the ephemeris data corresponding to the indication information. It should be noted that, in this implementation, because the satellite delivers the ephemeris data of the information type requested by the terminal, the "Format_indicator" field in the NR system information cannot indicate the delivered type.

**Embodiment 2**

The terminal may further transmit the ephemeris data through NR system information periodically sent by a satellite. For example, the ephemeris data is periodically sent by using broadcast OSI in other system information. FIG. 5b is a schematic diagram of another transmission process based on an NR system information according to this embodiment of this application. Compared with the implementation in the transmission process shown in FIG. 5a in which the satellite transmits the ephemeris data based on the request of the terminal, because other system information types sent by the satellite to the terminal further include the broadcast OSI, the satellite can periodically transmit the ephemeris data to the terminal through the broadcast OSI. In this implementation, the terminal does not need to send request information. For example, the satellite may carry the ephemeris data by using a system information block type X in other system information blocks sent to the terminal, so that the terminal periodically obtains the ephemeris data.

**Embodiment 3**

When the terminal obtains ephemeris data of the satellite for a plurality of times, ephemeris data obtained at least once includes the orbit status information, and ephemeris data obtained at least once includes the orbit parameter information, the NR system information further includes the system frame number SFN. Therefore, during implementation, the terminal and the satellite have the preset correspondence between the SFN and the information type included in the ephemeris data, and the satellite transmits the ephemeris data to the terminal based on the correspondence.

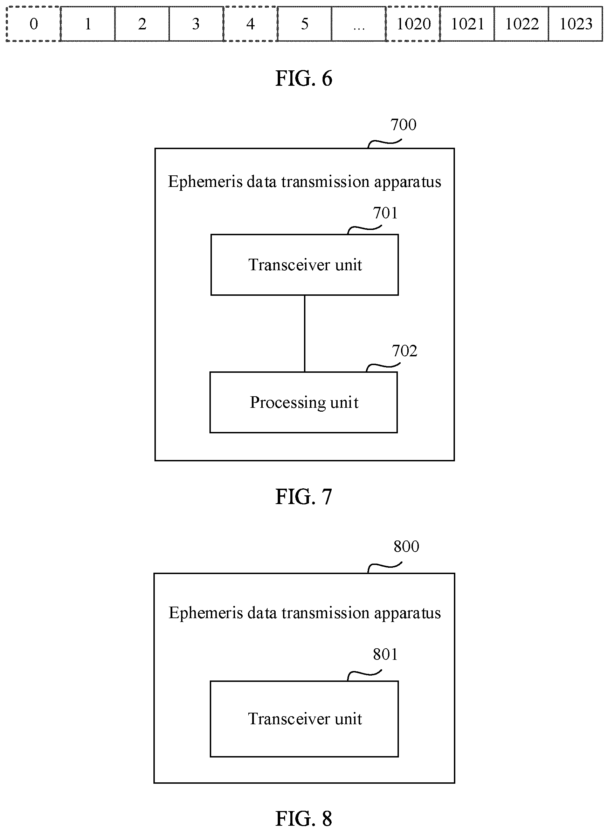

FIG. 6 is a schematic diagram of a correspondence between an SFN and an information type included in ephemeris data according to an embodiment of this application. In this embodiment, the satellite broadcasts the orbit parameter information once in every four frames of NR system messages (for example, when values of the SFN shown in FIG. 6 is 0, 4, ..., and 1020, the orbit parameter information is broadcast), and broadcasts the orbit status information three times (for example, when SFNs shown in FIG. 6 are not 0, 4, ..., and 1020, the orbit status information is broadcast).

After receiving the NR system information, the terminal determines the SFN included in the NR system information, to determine the information type included in the ephemeris data carried in the NR system information.

For the NR system information format for transmitting the ephemeris data in this embodiment, refer to the NR system information format shown in Table 1 in Embodiment 1. It should be noted that, in Embodiment 3, the information type included in the NR system information may be determined based on the SFN during implementation. Therefore, the NR system information transmitted in Embodiment 3 does not need to indicate, by using a "Format_indicator" field, the information type included in the ephemeris data delivered by the satellite.

In the foregoing embodiment, based on the correspondence that is pre-agreed by the satellite and the terminal and is between the SFN and the information type included in the ephemeris data, the satellite determines, based on the correspondence and the current SFN carried in the NR system information delivered each time, the information type included in the ephemeris data delivered each time. Therefore, the terminal may also determine, based on the SFN carried in the NR system information, the information type included in the ephemeris data delivered by the satellite, to perform processing such as satellite positioning or satellite prediction based on different types of ephemeris data. The satellite implicitly indicates, by using the SFN, the information type included in the ephemeris data to the terminal, so that different types of ephemeris data are alternately delivered, to meet various application scenarios based on different types of ephemeris data.

**Embodiment 4**

In addition to obtaining the ephemeris data of the satellite by using the NR system information, in another possible implementation, the terminal may obtain the ephemeris data of the satellite through the MAC CE included in the MAC PDU. When data is transmitted based on the MAC PDU, the MAC PDU has header information. The header information of the MAC PDU includes at least an LCID field, and the LCID field indicates a logical channel, a control information type, or a padding field. For usage of each value in the current LCID field, refer to the following Table 2:

**Table 2**

| Index | LCID values |
|---|---|
| 00000 (0) | Common control channel (common control channel, CCCH) |
| 00001-01010 (1-32) | Logical channel identifier (identity of the logical channel) |
| 01011-11001 (33-46) | Reserved (reserved) |
| 11010 (47) | Recommended bit rate |
| ... | |
| 11111 (63) | Padding (padding) |

It can be learned from Table 2 that bits 33-46 in the LCID field are reserved bits and are not used currently. Therefore, the satellite may select a value of an LCID from 33-46 in the LCID field to indicate a type of ephemeris data. For example, when LCID=33, it may be used to indicate that the information type included in the ephemeris data is orbit parameter information, and when LCID=34, it may be used to indicate that the information type included in the ephemeris data is orbit status information. Therefore, when the value of the LCID obtained by the terminal from the MAC CE is 33, it may be determined that the information type included in the ephemeris data transmitted by the MAC CE is the orbit parameter information.

Table 3-1 and Table 3-2 each show an example in which the MAC CE indicates an information type included in the ephemeris data. Table 3-1 indicates that the MAC CE is used to carry orbit parameter information when the LCID value is 33, and Table 3-2 indicates that the MAC CE is used to carry orbit status information when the LCID value is 34, as shown in the following:

**Table 3-1**

| R (reserved bit) | LCID (33) |
|---|---|
| Square_root_of_seme_axis (8 bits) (Chinese: square root $\sqrt{a}$ of semi-major axis) | |
| Eccentricity (8 bits) (Chinese: eccentricity $e$) | |

(continued)

| R (reserved bit) | LCID (33) |
|---|---|
| Longitude_of_ascending_node (8 bits) (Chinese: right ascension of ascending node $\Omega_0$) | |
| Inclination_angle (8 bits) (Chinese: orbital plane inclination angle $i_0$) | |
| Argument_of_perigee (8 bits) (Chinese: argument of perigee $\omega$) | |
| Mean_anomaly (8 bits) (Chinese: mean anomaly $M_0$) | |
| ReferenceTime_ephemeris (8 bits) (Chinese: reference time parameter) | |

**Table 3-2**

| R (reserved bit) | LCID (34) |
|---|---|
| X_position (8 bits) (Chinese: X coordinate parameter) | |
| Y_position (8 bits) (Chinese: Y coordinate parameter) | |
| Z_position (8 bits) (Chinese: Z coordinate parameter) | |
| X_velocity (8 bits) (Chinese: velocity parameter in a direction of the X coordinate parameter) | |
| Y_velocity (8 bits) (Chinese: velocity parameter in a direction of the Y coordinate parameter) | |
| Z_velocity (8 bits) (Chinese: velocity parameter in a direction of the Z coordinate parameter) | |
| ReferenceTime_ephemeris (8 bits) (Chinese: reference time parameter) | |

In Table 3-1 and Table 3-2, "R" is a reserved bit defined in the MAC CE, a value of "LCID" indicates an information type included in the ephemeris data, and other information in the MAC CE is the ephemeris data of the information type corresponding to the LCID value.

In another possible implementation, the satellite may select a value of an LCID from 33-46 in the LCID field to indicate that the MAC CE transmits the ephemeris data, and one-bit indication information is defined in the MAC CE to indicate an information type of the ephemeris data carried by the MAC CE. In this implementation, a value may be selected from reserved bits of the LCID to indicate the ephemeris data.

Table 4 shows an example in which a MAC CE indicates ephemeris data, and indicates that when the LCID is 33, the MAC CE is used to carry the ephemeris data, as shown in the following:

**Table 4**

| R (reserved bit) | LCID (33) |
|---|---|
| Format Indicator (indication information) (1 bit) | Square_root_of_seme_axis (7bits)/X_position (7 bits) (Chinese: square root $\sqrt{a}$ of semi-major axis/X coordinate parameter) |
| Eccentricity/Y_position (8 bits) (Chinese: eccentricity $e$/Y coordinate parameter) | |
| Longitude_of_ascending_node/Z_position (8 bits) (Chinese: right ascension of ascending node $\Omega_0$/Z coordinate parameter) | |
| Inclination_angle/X_velocity (8 bits) (Chinese: orbital plane inclination angle $i_0$/velocity parameter in a direction of the X coordinate parameter) | |
| Argument_of_perigee/Y_velocity (8 bits) | |
| (Chinese: argument of perigee $\omega$/velocity parameter in a direction of the Y coordinate parameter) | |
| Mean_anomaly/Z_velocity (8 bits) (Chinese: mean anomaly $M_0$/velocity parameter in a direction of the Z coordinate parameter) | |
| ReferenceTime_ephemeris (Chinese: reference time parameter) | |

It may be determined according to the foregoing Table 4 that the "Format Indicator" field included in the MAC CE indicates an information type of the ephemeris data carried by the MAC CE, and the "Format Indicator" occupies 1 bit. If a "Format Indicator" field in Table 4 indicates orbit parameter information, the parameter carried by the MAC CE shown in Table 4 is a parameter included in the orbit parameter information. Similarly, if the "Format Indicator" field in Table 4 indicates orbit status information, the parameter carried by the MAC CE shown in Table 4 is a parameter included in the orbit status information.

In addition, the MAC CE included in the MAC PDU includes two forms: one is a fixed-sized MAC CE, for example, a MAC subPDU including a "MAC CE 1" in FIG. 4 includes a "fixed-length MAC CE"; and the other is a variable-sized MAC CE, for example, a MAC subPDU including a "MAC CE 2" in FIG. 4 includes a "variable-length MAC CE". When the satellite sends the ephemeris data to the terminal, a parameter quantity of the ephemeris data that needs to be sent to the terminal is determined, and whether the parameter quantity exceeds a parameter quantity threshold allowed by a MAC CE of the fixed header is determined. If the parameter quantity included in the ephemeris data is less than or equal to the parameter quantity threshold allowed by the fixed-length MAC CE, the satellite transmits the ephemeris data based on the fixed-length MAC CE or the variable length MAC CE. If the parameter quantity included in the ephemeris data is greater than the parameter quantity threshold allowed by the fixed-length MAC CE, the satellite transmits the ephemeris data based on the variable length MAC CE.

For example, in a possible scenario, if the terminal needs high-precision ephemeris data, in addition to the Kepler orbit parameter and the reference time parameter, the orbit parameter information requested by the terminal may further include two clock correction parameters for a satellite clock. The parameter quantity sent by the satellite to the terminal is 9, which exceeds a preset parameter quantity threshold allowed by the MAC CE with the fixed header. Therefore, in this scenario, the satellite may carry the ephemeris data by using a MAC CE with the variable header.

Table 5 shows an example in which the MAC CE with the variable header indicates the ephemeris data according to this embodiment of this application is as follows:

**Table 5**

| R (reserved bit) | F (indication information) | LCID (33) |
|---|---|---|
| L (8 bits) (indication information) | | |
| Square_root_of_seme_axis (8 bits) (Chinese: square root $\sqrt{a}$ of semi-major axis) | | |
| Eccentricity (8 bits) (Chinese: eccentricity $e$) | | |
| Longitude_of_ascending_node (8 bits) (Chinese: right ascension of ascending node $\Omega_0$) | | |
| Inclination_angle (8 bits) (Chinese: orbital plane inclination angle $i_0$) | | |
| Argument_of_perigee (8 bits) (Chinese: argument of perigee $\omega$) | | |
| Mean_anomaly (8 bits) (Chinese: mean anomaly $M_0$) | | |
| ReferenceTime_ephemeris (8 bits) (Chinese: reference time parameter) | | |
| a1 (Chinese: clock correction parameter 1) | | |
| a0 (Chinese: clock correction parameter 2) | | |

In Table 5, "F" indicates a length of an "L" field, and the "L" field indicates a parameter quantity included in the ephemeris data carried by the MAC CE with the variable header, where a1 and a0 indicate clock correction parameters (including a clock velocity and a clock difference), and are used to obtain the ephemeris data with higher precision.

The ephemeris data transmission method in embodiments of this application is described in detail above with reference to FIG. 1 to FIG. 4, FIG. 5a and FIG. 5b, and FIG. 6. Based on a same technical concept as the foregoing ephemeris data transmission method, embodiments of this application further provide an ephemeris data transmission apparatus 700. As shown in FIG. 7, the ephemeris data transmission apparatus 700 includes a transceiver unit 701 and a processing unit 702. The apparatus 700 may be configured to implement the method described in the foregoing method embodiment of the terminal. The transceiver unit 701 is configured to obtain ephemeris data of a satellite for a plurality of times, where the ephemeris data includes any one of the following information types: orbit status information used to determine a position of the satellite, orbit parameter information indicating an orbit of the satellite; and the processing unit 702 is configured to: after the transceiver unit 701 obtains ephemeris data each time, determine an information type included in the obtained ephemeris data, where in a process in which the transceiver unit 701 obtains ephemeris data of the satellite for a plurality of times, ephemeris data obtained at least once includes the orbit status information, and ephemeris data obtained at least once includes the orbit parameter information.

In a possible design, the orbit status information includes at least one or more of the following parameters: a plurality of coordinate parameters in a specified coordinate system, and a velocity parameter in a direction of each coordinate parameter, where the specified coordinate system is preset for the satellite. For example, the orbit parameter information includes at least the following parameter: a mean anomaly $M_0$ at reference time in a Kepler orbit parameter.

In a possible design, the orbit status information further includes the following parameter: a reference time parameter indicating satellite time; and the orbit parameter information further includes at least one or more of the following parameters: a square root $\sqrt{a}$ of a semi-major axis, an eccentricity e, an orbital plane inclination angle $i_0$, a right ascension of ascending node $\Omega_0$, an argument of perigee $\omega$ in the Kepler orbit parameter, a plurality of perturbation corrections used to correct the Kepler orbit parameter, the reference time parameter indicating the satellite time, and a clock correction parameter for a satellite clock.

In a possible design, the transceiver unit 701 is specifically configured to obtain the ephemeris data from new radio technology NR system information. When determining the information type included in the obtained ephemeris data, the processing unit 702 is specifically configured to determine, based on first indication information included in request information, the information type included in the ephemeris data, where the request information is sent to the satellite before the transceiver unit 701 obtains ephemeris data of the satellite each time, and the first indication information indicates the information type included in the ephemeris data requested by the transceiver unit 701; determine, based on second indication information included in the NR system information, the information type included in the ephemeris data, where the second indication information is carried in other system information OSI included in the NR system information; or determine, based on a preset correspondence between a system frame number and an information type included in the ephemeris data and a current system frame number included in the NR system information, the information type included in the ephemeris data.

In a possible design, the transceiver unit 701 is specifically configured to obtain the ephemeris data from a media access control element MAC CE. When determining the information type included in the obtained ephemeris data, the processing unit 702 is specifically configured to: determine, based on a first logical channel identifier LCID value included in the MAC CE, the information type included in the ephemeris data; or determine, based on a second LCID value and third indication information included in the MAC CE, the information type included in the ephemeris data, where the second LCID value indicates that a MAC CE corresponding to the second LCID value is used to carry the ephemeris data, and the third indication information indicates the information type included in the ephemeris data carried by the MAC CE.

The ephemeris data transmission method in embodiments of this application is described in detail above with reference to FIG. 1 to FIG. 4, FIG. 5a and FIG. 5b, and FIG. 6. Based on a same technical concept as the foregoing ephemeris data transmission method, embodiments of this application further provide an ephemeris data transmission apparatus 800. As shown in FIG. 8, the ephemeris data transmission apparatus 800 includes a transceiver unit 801. The apparatus 800 may be configured to implement the method described in the foregoing method embodiment of the satellite. The transceiver unit 801 is configured to transmit ephemeris data of a satellite to a terminal for a plurality of times, so that after obtaining ephemeris data each time, the terminal determines an information type included in the obtained ephemeris data each time, where the ephemeris data includes any one of the following information types: orbit status information used to determine a position of the satellite, and orbit parameter information indicating an orbit of the satellite; and in a process in which the terminal obtains ephemeris data of the satellite for a plurality of times, ephemeris data obtained at least once includes the orbit status information, and ephemeris data obtained at least once includes the orbit parameter information.

In a possible design, the orbit status information includes at least one or more of the following parameters: a plurality of coordinate parameters in a specified coordinate system, and a velocity parameter in a direction of each coordinate parameter, where the specified coordinate system is preset for the satellite, and the orbit parameter information includes at least the following parameter: a mean anomaly $M_0$ at reference time in a Kepler orbit parameter.

In a possible design, the orbit status information further includes the following parameter: a reference time parameter indicating satellite time; and the orbit parameter information further includes at least one or more of the following parameters: a square root $\sqrt{a}$ of a semi-major axis, an eccentricity e, an orbital plane inclination angle $i_0$, a right ascension of ascending node $\Omega_0$, an argument of perigee $\omega$ in the Kepler orbit parameter, a plurality of perturbation corrections used to correct the Kepler orbit parameter, the reference time parameter indicating the satellite time, and a clock correction parameter for a satellite clock.

In a possible design, the transceiver unit 801 is specifically configured to transmit the ephemeris data to the terminal based on NR system information. When transmitting the ephemeris data of the satellite to the terminal, the transceiver unit 801 is specifically configured to: after the transceiver unit 801 receives request information sent by the terminal each time, determine, based on first indication information included in the request information, an information type included in the ephemeris data, and transmit the ephemeris data of the information type to the terminal, where the first request information indicates the information type included in the ephemeris data requested by the terminal; the transceiver unit 801 transmits the ephemeris data by using other system information OSI included in the NR system information, where the OSI includes second indication information, and the second indication information indicates an information type included in the ephemeris data; or the transceiver unit 801 determines, based on a preset correspondence between a system frame number and an information type included in ephemeris data and a current system frame number included in the sent NR system information, the information type included in the sent ephemeris data, and transmits the ephemeris data including the information type to the terminal.

In a possible design, the transceiver unit 801 is specifically configured to transmit the ephemeris data to the terminal based on a MAC CE. When transmitting the ephemeris data of the satellite to the terminal, the transceiver unit 801 is specifically configured to: send the ephemeris data based on the MAC CE, and indicate, by using a first LCID value included in the MAC CE, an information type included in the ephemeris data; or the transceiver unit 801 sends the ephemeris data based on the MAC CE, and indicates, by using a second LCID value and third indication information in the MAC CE, an information type included in the ephemeris data, where the second LCID value indicates that a MAC CE corresponding to the second LCID value is used to carry the ephemeris data, and the third indication information indicates the information type included in the ephemeris data carried by the MAC CE.

In a possible design, the MAC CE includes a fixed-length MAC CE or a variable-length MAC CE. When transmitting the ephemeris data to the terminal based on the MAC CE, the transceiver unit 801 is specifically configured to: if a parameter quantity included in the ephemeris data is less than or equal to a parameter quantity threshold allowed by the fixed-length MAC CE, transmit the ephemeris data based on the fixed-length MAC CE or the variable-length MAC CE; or if a parameter quantity included in the ephemeris data is greater than a parameter quantity threshold allowed by the fixed-length MAC CE, transmit the ephemeris data based on the variable-length MAC CE.

It should be noted that, in embodiments of this application, division into modules is an example, and is merely a logical function division. During actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

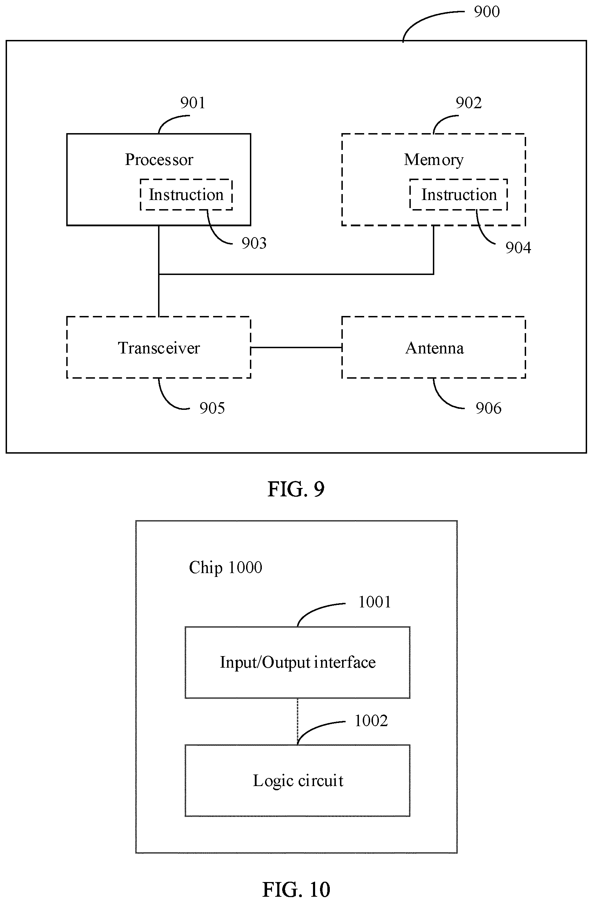

Based on a same concept as the foregoing ephemeris data transmission method, as shown in FIG. 9, this embodiment of this application further provides a schematic diagram of a structure of an ephemeris data transmission apparatus 900. The apparatus 900 may be configured to implement the method described in the foregoing method embodiments applied to the terminal or the satellite. Refer to the descriptions in the foregoing method embodiments. The apparatus 900 may be located in the terminal or the satellite, or may be the terminal or the satellite.

The apparatus 900 includes one or more processors 901. The processor 901 may be a general-purpose processor, a dedicated processor, or the like, for example, may be a baseband processor or a central processing unit. The baseband processor may be configured to process a communication protocol and communication data. The central processing unit may be configured to: control the ephemeris data transmission apparatus (for example, a base station, a terminal, or a chip), execute a software program, and process data of the software program. The ephemeris data transmission apparatus may include a transceiver unit, configured to input (receive) and output (send) a signal. For example, the transceiver unit may be a transceiver, a radio frequency chip, or the like.

The apparatus 900 includes one or more processors 901, and the one or more processors 901 may implement the method of the terminal or satellite in the foregoing embodiments.

Optionally, in addition to implementing the method in the foregoing embodiments, the processor 901 may further implement another function.

Optionally, in a design, the processor 901 may execute instructions, so that the apparatus 900 performs the methods described in the foregoing method embodiments. All or some of the instructions may be stored in the processor, for example, an instruction 903; or may be stored in a memory 902 coupled to the processor, for example, an instruction 904. The instructions 903 and 904 may be alternatively used together to enable the apparatus 900 to perform the method described in the foregoing method embodiments.

In still another possible design, the ephemeris data transmission apparatus 900 may alternatively include a circuit, and the circuit may implement a function of the terminal or the satellite in the foregoing method embodiment.

In still another possible design, the apparatus 900 may include one or more memories 902 storing the instruction 904. The instruction may be run on the processor, so that the apparatus 900 performs the method described in the foregoing method embodiments. Optionally, the memory may further store data. Optionally, the processor may also store an instruction and/or data. For example, the one or more memories 902 may store a correspondence described in the foregoing embodiments, or the related parameter or table provided in the foregoing embodiments. The processor and the memory may be separately disposed, or may be integrated together.

In still another possible design, the apparatus 900 may further include a transceiver 905 and an antenna 906. The processor 901 may be referred to as a processing unit, and controls an apparatus (a terminal or a base station). The transceiver 905 may be referred to as a transceiver, a transceiver circuit, a transceiver unit, or the like, and is configured to implement a receiving and sending function of the apparatus by using the antenna 906.

It should be noted that the processor in embodiments of this application may be an integrated circuit chip, and has a signal processing capability. In an implementation process, steps in the foregoing method embodiments can be completed by using a hardware integrated logic circuit 1002 in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams disclosed in embodiments of this application. The general-purpose processor may be a microprocessor, or the processor may be any conventional processor or the like. Steps of the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (RAM), and is used as an external cache. Though example but not limitation, many forms of RAM are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and method described in this specification includes but is not limited to these memories and any memory of another proper type.

An embodiment of this application further provides a computer-readable medium. The computer-readable medium stores a computer program. When the computer program is executed by a computer, the ephemeris data transmission method in any one of the foregoing method embodiments applied to the terminal or the satellite is implemented.

An embodiment of this application further provides a computer program product. When the computer program product is executed by a computer, the ephemeris data transmission method in any one of the foregoing method embodiments applied to the terminal or the satellite is implemented.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

An embodiment of this application further provides a processing apparatus, including a processor and an interface. The processor is configured to perform the ephemeris data transmission method in any one of the foregoing method embodiments applied to the terminal or the satellite.

It should be understood that the processing apparatus may be a chip. The processor may be implemented by using hardware, or may be implemented by using software. When being implemented by using hardware, the processor may be a logic circuit, an integrated circuit, or the like. When being implemented by using software, the processor may be a general-purpose processor, and is implemented by reading software code stored in a memory. The memory may be integrated into the processor, or may be located outside the processor, and exist independently.

As shown in FIG. 10, an embodiment of this application further provides a chip 1000, including an input/output interface 1001 and a logic circuit 1002. The input/output interface 1001 is configured to receive/output code instructions or information, and the logic circuit 1002 is configured to execute the code instructions or perform, based on the information, the ephemeris data transmission method in any one of the foregoing method embodiments applied to the terminal or the satellite.

The chip 1000 may implement functions shown by the processing unit and/or the transceiver unit in the foregoing embodiments.

For example, the input/output interface 1001 is configured to input ephemeris data of a satellite, and the input/output interface 1001 is further configured to output request information used to request ephemeris data. Optionally, the input/output interface 1001 may be further configured to receive code instructions, where the code instructions are used to instruct to obtain ephemeris data of a satellite, or indicate to determine an information type included in the obtained ephemeris data after ephemeris data is obtained each time.

For another example, the input/output interface 1001 is configured to output ephemeris data of a satellite, and the input/output interface 1001 is further configured to input request information used to request ephemeris data by the terminal. Optionally, the input/output interface 1001 may be further configured to receive code instructions, where the code instructions are used to instruct to transmit ephemeris data of the satellite to the terminal for a plurality of times.

An embodiment of this application further provides an ephemeris data transmission system, including a terminal or a satellite. The terminal is configured to perform the ephemeris data transmission method applied to any one of the foregoing method embodiments of the terminal, and the satellite is configured to perform the ephemeris data transmission method applied to any one of the foregoing method embodiments of the satellite.

A person of ordinary skill in the art may be aware that, the units and algorithm steps in the examples described with reference to embodiments disclosed herein may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments of this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware, or a combination thereof. When this application is implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be properly defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and a disc (disc) used in this application include a compact disc (CD), a laser disc, an optical disc, a digital versatile disc (DVD), a floppy disk, and a Blu-ray disc, where the disk generally copies data in a magnetic manner, and the disc copies data optically in a laser manner. The foregoing combination should also be included in the protection scope of the computer-readable medium.

In conclusion, the foregoing is merely example embodiments of the technical solutions of this application, but is not intended to limit the protection scope of this application. Any modification, equivalent replacement, or improvement made without departing from the spirit and principle of this application shall fall within the protection scope of this application.

**Claims**

1. An ephemeris data transmission method, comprising:

    obtaining, by a terminal, ephemeris data of a satellite for a plurality of times, wherein the ephemeris data comprises any one of the following information types: orbit status information used to determine a position of the satellite, and orbit parameter information indicating an orbit of the satellite; and
    after obtaining ephemeris data each time, determining, by the terminal, an information type comprised in the obtained ephemeris data, wherein
    in a process in which the terminal obtains ephemeris data of the satellite for a plurality of times, ephemeris data obtained at least once comprises the orbit status information, and ephemeris data obtained at least once comprises the orbit parameter information.

2. The method according to claim 1, wherein the orbit status information comprises at least one or more of the following parameters: a plurality of coordinate parameters in a specified coordinate system, and a velocity parameter in a direction of each coordinate parameter; and
the orbit parameter information comprises at least the following parameter: a mean anomaly $M_0$ at reference time in a Kepler orbit parameter.

3. The method according to claim 2, wherein the orbit status information further comprises the following parameter: a reference time parameter indicating satellite time; and
the orbit parameter information further comprises at least one or more of the following parameters: a square root $\sqrt{a}$ of a semi-major axis, an eccentricity e, an orbital plane inclination angle $i_0$, a right ascension of ascending node $\Omega_0$, an argument of perigee $\omega$ in the Kepler orbit parameter, a plurality of perturbation corrections used to correct the Kepler orbit parameter, the reference time parameter indicating the satellite time, and a clock correction parameter for a satellite clock.

4. The method according to claim 1, wherein the terminal obtains the ephemeris data from new radio NR system information; and
the determining, by the terminal, an information type comprised in the obtained ephemeris data comprises:

    determining, by the terminal based on first indication information comprised in request information, the information type comprised in the ephemeris data, wherein the request information is sent to the satellite before the terminal obtains the ephemeris data of the satellite each time, and the first indication information indicates the information type comprised in the ephemeris data requested by the terminal;

determining, by the terminal based on second indication information comprised in the NR system information, the information type comprised in the ephemeris data, wherein the second indication information is carried in other system information OSI comprised in the NR system information; or

determining, by the terminal based on a preset correspondence between a system frame number and an information type comprised in ephemeris data and a current system frame number comprised in the NR system information, the information type comprised in the ephemeris data.

5. The method according to claim 1, wherein the terminal obtains the ephemeris data from a media access control control element MAC CE; and

the determining, by the terminal, an information type comprised in the obtained ephemeris data comprises:

determining, by the terminal based on a first logical channel identifier LCID value comprised in the MAC CE, the information type comprised in the ephemeris data; or

determining, by the terminal based on a second LCID value and third indication information comprised in the MAC CE, the information type comprised in the ephemeris data, wherein the second LCID value indicates that a MAC CE corresponding to the second LCID value is used to carry the ephemeris data, and the third indication information indicates the information type comprised in the ephemeris data carried by the MAC CE.

6. An ephemeris data transmission method, comprising:

transmitting, by a satellite, ephemeris data of the satellite to a terminal for a plurality of times, so that after obtaining ephemeris data each time, the terminal determines an information type comprised in the obtained ephemeris data, wherein

the ephemeris data comprises any one of the following information types: orbit status information used to determine a position of the satellite, and orbit parameter information indicating an orbit of the satellite; and in a process in which the terminal obtains ephemeris data of the satellite for a plurality of times, ephemeris data obtained at least once comprises the orbit status information, and ephemeris data obtained at least once comprises the orbit parameter information.

7. The method according to claim 6, wherein the orbit status information comprises at least one or more of the following parameters: a plurality of coordinate parameters in a specified coordinate system, and a velocity parameter in a direction of each coordinate parameter; and

the orbit parameter information comprises at least the following parameter: a mean anomaly $M_0$ at reference time in a Kepler orbit parameter.

8. The method according to claim 7, wherein the orbit status information further comprises the following parameter: a reference time parameter indicating satellite time; and

the orbit parameter information further comprises at least one or more of the following parameters: a square root $\sqrt{a}$ of a semi-major axis, an eccentricity e, an orbital plane inclination angle $i_0$, a right ascension of ascending node $\Omega_0$, an argument of perigee $\omega$ in the Kepler orbit parameter, a plurality of perturbation corrections used to correct the Kepler orbit parameter, the reference time parameter indicating the satellite time, and a clock correction parameter for a satellite clock.

9. The method according to claim 6, wherein the satellite transmits the ephemeris data to the terminal based on NR system information; and

the transmitting, by a satellite, ephemeris data of the satellite to a terminal comprises:

after receiving request information sent by the terminal each time, determining, by the satellite based on first indication information comprised in the request information, an information type comprised in the ephemeris data, and transmitting the ephemeris data of the information type to the terminal, wherein the first request information indicates the information type comprised in the ephemeris data requested by the terminal;

transmitting, by the satellite, the ephemeris data by using other system information OSI comprised in the NR system information, wherein the OSI comprises second indication information, and the second indication information indicates an information type comprised in the ephemeris data; or

determining, by the satellite based on a preset correspondence between a system frame number and an information type comprised in ephemeris data and a current system frame number comprised in the sent NR system information, an information type comprised in the sent ephemeris data, and transmitting the ephemeris data comprising the information type to the terminal.

10. The method according to claim 6, wherein the satellite transmits the ephemeris data to the terminal based on a MAC CE; and
the transmitting, by a satellite, ephemeris data of the satellite to a terminal comprises:

sending, by the satellite, the ephemeris data based on the MAC CE, and indicating, by using a first LCID value comprised in the MAC CE, an information type comprised in the ephemeris data; or
sending, by the satellite, the ephemeris data based on the MAC CE, and indicating, by using a second LCID value and third indication information in the MAC CE, an information type comprised in the ephemeris data, wherein the second LCID value indicates that a MAC CE corresponding to the second LCID value is used to carry the ephemeris data, and the third indication information indicates the information type comprised in the ephemeris data carried by the MAC CE.

11. The method according to claim 10, wherein the MAC CE comprises a fixed-length MAC CE or a variable-length MAC CE; and
that the satellite transmits the ephemeris data to the terminal based on a MAC CE comprises:

if a parameter quantity comprised in the ephemeris data is less than or equal to a parameter quantity threshold allowed by the fixed-length MAC CE, transmitting, by the satellite, the ephemeris data based on the fixed-length MAC CE or the variable-length MAC CE; or
if a parameter quantity comprised in the ephemeris data is greater than a parameter quantity threshold allowed by the fixed-length MAC CE, transmitting, by the satellite, the ephemeris data based on the variable-length MAC CE.

12. An ephemeris data transmission apparatus, comprising:

a transceiver unit, configured to obtain ephemeris data of a satellite for a plurality of times, wherein the ephemeris data comprises any one of the following information types: orbit status information used to determine a position of the satellite, and orbit parameter information indicating an orbit of the satellite; and
a processing unit, configured to: after the transceiver unit obtains ephemeris data each time, determine an information type comprised in the obtained ephemeris data, wherein
in a process in which the transceiver unit obtains ephemeris data of the satellite for a plurality of times, ephemeris data obtained at least once comprises the orbit status information, and ephemeris data obtained at least once comprises the orbit parameter information.

13. The apparatus according to claim 12, wherein the orbit status information comprises at least one or more of the following parameters: a plurality of coordinate parameters in a specified coordinate system, and a velocity parameter in a direction of each coordinate parameter; and
the orbit parameter information comprises at least the following parameter: a mean anomaly $M_0$ at reference time in a Kepler orbit parameter.

14. The apparatus according to claim 13, wherein the orbit status information further comprises the following parameter: a reference time parameter indicating satellite time; and
the orbit parameter information further comprises at least one or more of the following parameters: a square root $\sqrt{a}$ of a semi-major axis, an eccentricity e, an orbital plane inclination angle $i_0$, a right ascension of ascending node $\Omega_0$, an argument of perigee $\omega$ in the Kepler orbit parameter, a plurality of perturbation corrections used to correct the Kepler orbit parameter, the reference time parameter indicating the satellite time, and a clock correction parameter for a satellite clock.

15. The apparatus according to claim 12, wherein the transceiver unit is specifically configured to obtain the ephemeris data from new radio NR system information; and

when determining the information type comprised in the obtained ephemeris data, the processing unit is specifically configured to:

determine, based on first indication information comprised in request information, the information type comprised in the ephemeris data, wherein the request information is sent to the satellite before the transceiver unit obtains the ephemeris data of the satellite each time, and the first indication information indicates the information type comprised in the ephemeris data requested by the transceiver unit;

determine, based on second indication information comprised in NR system information, the information type comprised in the ephemeris data, wherein the second indication information is carried in other system information OSI comprised in the NR system information; or

determine, based on a preset correspondence between a system frame number and an information type comprised in ephemeris data and a current system frame number comprised in the NR system information, the information type comprised in the ephemeris data.

16. The apparatus according to claim 12, wherein the transceiver unit is specifically configured to obtain the ephemeris data from a media access control control element MAC CE; and

when determining the information type comprised in the obtained ephemeris data, the processing unit is specifically configured to:

determine, based on a first logical channel identifier LCID value comprised in the MAC CE, the information type comprised in the ephemeris data; or

determine, based on a second LCID value and third indication information comprised in the MAC CE, the information type comprised in the ephemeris data, wherein the second LCID value indicates that a MAC CE corresponding to the second LCID value is used to carry the ephemeris data, and the third indication information indicates the information type comprised in the ephemeris data carried by the MAC CE.

17. An ephemeris data transmission apparatus, comprising:

a transceiver unit, configured to transmit ephemeris data of a satellite to a terminal for a plurality of times, so that after obtaining ephemeris data each time, the terminal determines an information type comprised in the obtained ephemeris data each time, wherein

the ephemeris data comprises any one of the following information types: orbit status information used to determine a position of the satellite, and orbit parameter information indicating an orbit of the satellite; and in a process in which the terminal obtains ephemeris data of the satellite for a plurality of times, ephemeris data obtained at least once comprises the orbit status information, and ephemeris data obtained at least once comprises the orbit parameter information.

18. The apparatus according to claim 17, wherein the orbit status information comprises at least one or more of the following parameters: a plurality of coordinate parameters in a specified coordinate system, and a velocity parameter in a direction of each coordinate parameter; and

the orbit parameter information comprises at least the following parameters: a mean anomaly $M_0$ at reference time in a Kepler orbit parameter.

19. The apparatus according to claim 18, wherein the orbit status information further comprises the following parameter: a reference time parameter indicating satellite time; and

the orbit parameter information further comprises at least one or more of the following parameters: a square root $\sqrt{a}$ of a semi-major axis, an eccentricity e, an orbital plane inclination angle $i_0$, a right ascension of ascending node $\Omega_0$, an argument of perigee $\omega$ in the Kepler orbit parameter, a plurality of perturbation corrections used to correct the Kepler orbit parameter, the reference time parameter indicating the satellite time, and a clock correction parameter for a satellite clock.

20. The apparatus according to claim 17, wherein when transmitting the ephemeris data of the satellite to the terminal, the transceiver unit is specifically configured to:

after the transceiver unit receives request information sent by the terminal each time, determine, based on first indication information comprised in the request information, an information type comprised in the ephemeris data, and transmit the ephemeris data of the information type to the terminal, wherein the first request information indicates the information type comprised in the ephemeris data requested by the terminal;

transmit the ephemeris data by using other system information OSI comprised in the NR system information, wherein the OSI comprises second indication information, and the second indication information indicates an information type comprised in the ephemeris data; or

determine, based on a preset correspondence between a system frame number and an information type comprised in ephemeris data and a current system frame number comprised in the sent NR system information, an information type comprised in the sent ephemeris data, and transmit the ephemeris data comprising the information type to the terminal.

21. The apparatus according to claim 17, wherein when transmitting the ephemeris data of the satellite to the terminal, the transceiver unit is specifically configured to:

send the ephemeris data to the terminal based on a MAC CE, and indicate, by using a first LCID value comprised in the MAC CE, an information type comprised in the ephemeris data; or

send the ephemeris data to the terminal based on the MAC CE, and indicate, by using a second LCID value and third indication information in the MAC CE, an information type comprised in the ephemeris data, wherein the second LCID value indicates that a MAC CE corresponding to the second LCID value is used to carry the ephemeris data, and the third indication information indicates the information type comprised in the ephemeris data carried by the MAC CE.

22. The apparatus according to claim 21, wherein the MAC CE comprises a fixed-length MAC CE or a variable-length MAC CE; and

when transmitting the ephemeris data to the terminal based on the MAC CE, the transceiver unit is specifically configured to:

if a parameter quantity comprised in the ephemeris data is less than or equal to a parameter quantity threshold allowed by the fixed-length MAC CE, transmit the ephemeris data based on the fixed-length MAC CE or the variable-length MAC CE; or

if a parameter quantity comprised in the ephemeris data is greater than a parameter quantity threshold allowed by the fixed-length MAC CE, transmit the ephemeris data based on the variable-length MAC CE.

23. A communication device, comprising a processor and a memory, wherein the processor and the memory are electrically coupled;

the memory is configured to store a computer program instruction; and

the processor is configured to execute some or all of the computer program instructions in the memory, and when the some or all of the computer program instructions are executed, the method according to any one of claims 1 to 5 is implemented, or the method according to any one of claims 6 to 11 is implemented.

24. A computer-readable storage medium, wherein the computer storage medium stores a computer readable instruction, and when a computer reads and executes a computer readable instruction, the computer is enabled to perform the method according to any one of claims 1 to 5 or the method according to any one of claims 6 to 11.

25. A chip, comprising a logic circuit and an input/output interface, wherein the input/output interface is configured to receive a code instruction or information, and the logic circuit is configured to execute the code instruction or based on the information, to perform the method according to any one of claims 1 to 5, or the method according to any one of claims 6 to 11.

26. An ephemeris data transmission system, comprising the ephemeris data transmission apparatus according to any one of claims 12 to 16 and the ephemeris data transmission apparatus according to any one of claims 17 to 22.

27. A computer program product, wherein the computer program product comprises computer program code, and when the computer program code is run on a computer, the computer is enabled to perform the method according to any one of claims 1 to 5, or perform the method according to any one of claims 6 to 11.

FIG. 1

Terminal

Satellite

200: Transmit ephemeris data of the satellite for a plurality of times, where the ephemeris data includes any one of the following information types: orbit status information used to determine a position of the satellite, and orbit parameter information indicating an orbit of the satellite

201: Obtain ephemeris data of the satellite for a plurality of times

202: Determine an information type included in the obtained ephemeris data, where in a process in which the terminal obtains ephemeris data of the satellite for a plurality of times, ephemeris data obtained at least once includes the orbit status information, and ephemeris data obtained at least once includes the orbit parameter information

FIG. 2

UE                                                                          gNB

Msg 1: Sent a preamble (preamble)

Msg 2: Random access response

Msg 3: First scheduling transmission

Msg 4: Contention resolution

FIG. 3

Header information | MAC SDU

MAC subPDU including a MAC SDU

MAC subPDU including padding information

Header information | MAC CE with a fixed header | Header information | MAC CE with a variable header

Media access control (MAC) layer sub-protocol data unit (PUD) including a MAC CE 1

MAC subPDU including a MAC CE 2

MAC subPDU including a MAC service data unit (SDU)

...

**FIG. 4**

Terminal                                                                Satellite

Master information block (MIB)

Other system information block type 1

System information request

Other system information block type X

FIG. 5a

Terminal                                                                Satellite

Master information block (MIB)

Other system information block type 1

Other system information block type X

FIG. 5b

| 0 | 1 | 2 | 3 | 4 | 5 | ... | 1020 | 1021 | 1022 | 1023 |

**FIG. 6**

700

Ephemeris data transmission apparatus

701

Transceiver unit

702

Processing unit

**FIG. 7**

800

Ephemeris data transmission apparatus

801

Transceiver unit

**FIG. 8**

900

Processor
901

Instruction
903

Memory
902

Instruction
904

Transceiver
905

Antenna
906

**FIG. 9**

Chip 1000

Input/Output interface
1001

Logic circuit
1002

**FIG. 10**

## INTERNATIONAL SEARCH REPORT

| International application No. |
| --- |
| **PCT/CN2021/100096** |

**A. CLASSIFICATION OF SUBJECT MATTER**

H04B 7/185(2006.01)i

According to International Patent Classification (IPC) or to both national classification and IPC

**B. FIELDS SEARCHED**

Minimum documentation searched (classification system followed by classification symbols)

H04B; H04W; G01S

Documentation searched other than minimum documentation to the extent that such documents are included in the fields searched

Electronic data base consulted during the international search (name of data base and, where practicable, search terms used)

WPI, EPODOC, CNPAT, CNKI: 导航电文 广播星历 预报星历 轨道 参数 状态 多次 数次 实时 定位 navigation message almanac ephemeris orbital parameter status state multi realtime position

**C. DOCUMENTS CONSIDERED TO BE RELEVANT**

| Category* | Citation of document, with indication, where appropriate, of the relevant passages | Relevant to claim No. |
| --- | --- | --- |
| X | CN 101859292 A (SONY CORPORATION) 13 October 2010 (2010-10-13) description, paragraphs [0055]-[0102], and figure 2 | 1027 |
| X | CN 101883319 A (SHANGHAI HUAQIN TELECOM TECHNOLOGY CO., LTD.) 10 November 2010 (2010-11-10) description, paragraphs [0002]-[0012] | 1-27 |
| X | CN 102749637 A (XI'AN DATANG TELECOM CO., LTD.) 24 October 2012 (2012-10-24) description, paragraphs [0002]-[0024] | 1-27 |
| X | CN 209264964 U (JIANGSU SHENYU BEIDOU SATELLITE TECHNOLOGY CO., LTD.) 16 August 2019 (2019-08-16) description, paragraphs [0002]-[0004] | 1-27 |
| A | US 2003004640 A1 (VAYANOS, Alkinoos H.) 02 January 2003 (2003-01-02) entire document | 1-27 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 September 2021** | **13 September 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/100096**

| Patent document cited in search report | | | Publication date (day/month/year) | Patent family member(s) | | | Publication date (day/month/year) |
|---|---|---|---|---|---|---|---|
| CN | 101859292 | A | 13 October 2010 | EP | 2239593 | A1 | 13 October 2010 |
| | | | | AT | 549639 | T | 15 March 2012 |
| | | | | JP | 2010251850 | A | 04 November 2010 |
| | | | | US | 2010260239 | A1 | 14 October 2010 |
| | | | | TW | 201126195 | A | 01 August 2011 |
| CN | 101883319 | A | 10 November 2010 | None | | | |
| CN | 102749637 | A | 24 October 2012 | None | | | |
| CN | 209264964 | U | 16 August 2019 | None | | | |
| US | 2003004640 | A1 | 02 January 2003 | WO | 03001236 | A2 | 03 January 2003 |
| | | | | IL | 159278 | A | 03 August 2009 |
| | | | | EP | 1399756 | A2 | 24 March 2004 |
| | | | | HK | 1076512 | A1 | 20 January 2006 |
| | | | | AR | 034627 | A1 | 03 March 2004 |
| | | | | CA | 2451290 | A1 | 03 January 2003 |
| | | | | CN | 1633604 | A | 29 June 2005 |
| | | | | JP | 2005521857 | A | 21 July 2005 |
| | | | | MY | 130562 | A | 29 June 2007 |
| | | | | AU | 2002310457 | A1 | 08 January 2003 |

Form PCT/ISA/210 (patent family annex) (January 2015)

**EP 4 207 629 A1**

**REFERENCES CITED IN THE DESCRIPTION**

**Patent documents cited in the description**

- CN 202011102661
- CN 202110368255